# DEMANDE DE BREVET EUROPEEN

(11) **EP 4 831 526 A1**
(43) Date de publication de la demande: **28.10.2026**
(21) Numéro de dépôt: 26174197.9
(22) Date de dépôt: 23.04.2026
(51) Int. Cl.: F16L 21/03, F16L 37/088, F16L 37/084

(54) **EMBOUT FEMELLE POUR UN RACCORD FLUIDIQUE**

(30) Priorité: 24.04.2025 FR 2504344
(71) Demandeur: Hutchinson, 92110 Clichy (FR)
(72) Inventeur: THILLET, Antoine, 45220 MONTARGIS (FR); MONGENDRE, Julien, 45530 SURY AUX BOIS (FR)
(74) Mandataire: Gevers & Orès

(57) **Abrégé**

Embout femelle (12) pour un raccord fluidique (10), cet embout (12) comportant :
- un corps (28) tubulaire comprenant un passage interne (30) définissant au moins une entrée de fluide et au moins une sortie de fluide,
- un joint annulaire (18) d'étanchéité, et
- un anneau de retenue (16) du joint (18) dans le passage (30), et
- un témoin (80) mobile porté par l'anneau (16).

## Description

### Domaine technique de l'invention

L'invention concerne un embout femelle pour un raccord fluidique ainsi qu'un raccord fluidique comportant un tel embout femelle.

### Arrière-plan technique

L'état de la technique est illustré par les documents FR-A1-2891889, US-B2-7316425, EP-A1-1972846 et FR-A1-3082586.

De manière classique, un raccord fluidique comprend deux embouts, respectivement mâle et femelle, qui sont destinés à être engagés l'un dans l'autre. Chacun des embouts est relié à un tuyau ou un tube et permet de raccorder ces tuyaux ou ces tubes entre eux. On rencontre ce type de raccord fluidique dans de nombreux domaines et par exemple dans le domaine automobile, pour un circuit de climatisation par exemple.

Un raccord fluidique est en général équipé d'au moins un joint d'étanchéité qui assure une étanchéité entre les embouts mâle et femelle. Le joint d'étanchéité peut être porté par l'embout mâle et coopérer avec l'embout femelle, ou inversement peut être porté par l'embout femelle et coopérer avec l'embout mâle.

La présente invention concerne cette seconde configuration dans laquelle l'embout femelle porte un joint d'étanchéité qui est destiné à coopérer avec l'embout mâle.

Il est par exemple connu un embout femelle qui comprend une gorge annulaire interne dans laquelle est logé un joint d'étanchéité. Du fait de contraintes industrielles, il n'est pas possible de réaliser intégralement la gorge dans l'embout femelle. Cette gorge est en partie définie par un corps de l'embout femelle et en partie par un anneau rapporté et fixé dans l'embout.

Le corps de l'embout femelle comprend une surface cylindrique interne et une première face annulaire qui s'étend vers l'intérieur depuis une première extrémité axiale de la surface cylindrique.

L'anneau de retenue est monté du côté d'une seconde extrémité axiale de la surface cylindrique, opposée à ladite première extrémité. Cet anneau définit une seconde face annulaire qui est axialement en regard de la première face annulaire et qui définit avec elle la gorge de montage du joint.

Dans la technique actuelle, l'anneau est monté en force à l'intérieur de l'embout par translation de l'anneau le long de l'axe d'engagement de l'embout mâle dans l'embout femelle. Il est engagé dans l'embout femelle jusqu'à un logement qui est situé du côté de la second extrémité précitée et qui comprend un godron sous la forme d'une crête en saillie.

Cependant, cette configuration présente des inconvénients. Tout d'abord, le montage de l'anneau dans l'embout femelle est effectué à l'aide d'une machine car les efforts de montage de l'anneau dans son logement sont élevés (environ 250N). Par ailleurs, la fonction de l'anneau est de retenir le joint, tout en respectant des cotes de la gorge. Cependant, la largeur de la gorge, c'est-à-dire la dimension axiale de la gorge mesurée le long de l'axe d'engagement, est susceptible de varier en raison de la forme du godron. En effet, cette forme est difficilement maitrisable lors du démoulage de l'embout femelle. Il arrive donc que la largeur de la gorge ne soit pas maîtrisée.

La présente invention propose une solution simple, efficace et économique, qui permet de résoudre les problèmes de la technique antérieure.

### Résumé de l'invention

A cet effet, l'invention propose un embout femelle pour un raccord fluidique, cet embout comportant :
- un corps tubulaire comprenant un passage interne définissant au moins une entrée de fluide et au moins une sortie de fluide, le passage interne comportant un premier axe et étant apte à recevoir un embout mâle par engagement de l'embout mâle dans l'embout femelle le long dudit axe, le passage comportant une surface cylindrique interne s'étendant autour dudit axe et une première face annulaire qui s'étend autour dudit axe radialement vers l'intérieur depuis une première extrémité axiale de la surface cylindrique,
- un anneau de retenue monté dans le passage, du côté d'une seconde extrémité axiale de la surface cylindrique, opposée à ladite première extrémité, cet anneau définissant une seconde face annulaire qui s'étend autour dudit axe radialement vers l'intérieur, les première et seconde faces annulaires étant axialement en regard l'une de l'autre et définissant entre elles et avec ladite surface cylindrique une gorge annulaire débouchant radialement vers l'intérieur, et
- un joint annulaire d'étanchéité logé dans ladite gorge, le joint étant apte à coopérer par appui axial, respectivement avec lesdites première et seconde faces annulaires, et par appui radial respectivement avec ladite surface cylindrique et ledit embout mâle,
le corps comprenant une première fenêtre de montage de l'anneau dans le passage, cette première fenêtre ayant une forme générale allongée dans un plan perpendiculaire audit axe et étant apte à permettre le montage de l'anneau dans le passage à travers elle par translation de l'anneau dans ledit plan.

L'invention propose ainsi de remplacer le montage de l'anneau en direction axiale, par un montage de l'anneau en direction transversale. Pour cela, le corps de l'embout femelle comprend une fenêtre de montage de l'anneau. Cette configuration est avantageuse car elle permet de réduire de manière significative les efforts nécessaires au montage de l'anneau dans l'embout. Dans la technique antérieure, ces efforts sont importants car ils sont équivalents aux efforts nécessaires pour extraire axialement l'anneau de l'embout donc pour éviter une extraction accidentelle de l'anneau de l'embout, on fait en sorte que les efforts nécessaires à cette extraction soient très importants. Au contraire, dans le cadre de la présente invention, comme le montage de l'anneau est réalisé en direction transversale, les efforts nécessaires à son montage sont indépendants des efforts nécessaires pour extraire accidentellement l'anneau de l'embout en direction axiale. Il est donc possible avec l'invention de monter manuellement l'anneau dans l'embout femelle, avec l'aide ou non d'une machine particulière. Les efforts de montage de l'anneau sont ici orientés dans le plan précité, radialement vers l'axe du passage.

L'embout selon l'invention peut comprendre une ou plusieurs des caractéristiques suivantes, prises isolément les unes des autres ou en combinaison les unes avec les autres :
- la fenêtre a en outre une forme générale incurvée ou en arc de cercle autour dudit axe ;
- la fenêtre a une longueur maximale qui représente au moins 70%, et de préférence au moins 80%, d'un diamètre externe du corps au niveau duquel la fenêtre est située ;
   -- la fenêtre a une longueur maximale qui représente au plus 90% d'un diamètre externe du corps au niveau duquel la fenêtre est située ;
   -- la fenêtre débouche radialement directement du côté de de ladite seconde extrémité axiale de la surface cylindrique ;
   -- l'anneau est monté dans le passage à travers la fenêtre par encliquetage élastique et/ou par engagement en force ;
   -- le corps comprend une seconde fenêtre diamétralement opposée à la première fenêtre et apte à recevoir une partie de l'anneau en fin de montage ;
   -- les première et seconde fenêtres ont des formes et/ou des dimensions différentes ;
   -- l'anneau comprend au moins un élément d'indexage apte à coopérer avec au moins un élément complémentaire du corps ;
   -- l'anneau comprend :
      une base annulaire s'étendant autour d'un second axe destiné à être confondu avec le premier axe lorsque l'anneau est monté dans le passage,
      un premier bossage en saillie sur la base et s'étendant radialement vers l'extérieur depuis la base,
   voire également un second bossage en saillie sur la base, diamétralement opposé au premier bossage, et s'étendant radialement vers l'extérieur depuis la base ;
   -- le premier bossage est complémentaire de la première fenêtre et est configuré pour occuper et obturer cette fenêtre lorsque l'anneau est monté dans le corps ;
   -- le second bossage est complémentaire de la seconde fenêtre et est configuré pour occuper et obturer cette fenêtre lorsque l'anneau est monté dans le corps ;
   -- le premier bossage a une forme générale incurvée ou en arc de cercle autour du second axe et a une étendue angulaire autour de ce second axe qui est comprise entre 90 et 180°, et de préférence entre 90 et 130° ;
   -- le second bossage a une étendue angulaire autour du second axe qui est comprise entre 10 et 45°, et de préférence entre 30 et 40° ;
   -- le premier bossage comprend deux extrémités circonférentielles opposées comportant respectivement deux faces latérales parallèles entre elles et au second axe et orientées radialement vers l'extérieur dans des directions opposées, ces faces latérales étant à une distance l'une de l'autre qui est supérieure au diamètre externe maximal de la base ;
   -- l'anneau comprend au moins deux dents d'encliquetage élastique qui sont en saillie sur la base et s'étendent radialement vers l'extérieur depuis la base, ces deux dents étant diamétralement opposées et aptes à être engagées dans des rainures axiales dudit passage ;
   -- l'anneau comprend au moins un premier doigt d'indexage en saillie axiale sur ledit premier bossage, voire un second doigt d'indexage en saillie axiale sur ledit second bossage, le ou chaque doigt d'indexage étant apte à être engagé dans une fente du corps ;
   -- la base comprend une surface tronconique interne qui s'étend sur au moins 80%, voire 90%, de sa longueur ou dimension axiale mesurée le long du second axe ;
   -- le ou chaque bossage est formé sur une surface cylindrique externe qui s'étend sur au moins 80%, voire 90%, de sa longueur ou dimension axiale mesurée le long du second axe ;
   -- l'anneau comprend au moins un évidement d'allégement, qui débouche par exemple du côté de ladite seconde face annulaire ;
   -- l'anneau comprend des nervures en saillie sur au moins une face de l'anneau perpendiculaire à l'axe et/ou sur au moins une face de l'anneau parallèle au second axe, ces nervures ayant une forme allongée et s'étendant parallèlement audit plan, ces nervures étant aptes à coopérer par appui et glissement avec le corps lors du montage de l'anneau de façon à créer des points durs lors de ce montage ;
   -- l'anneau est formé d'une seule pièce ;
   -- la première face annulaire est perpendiculaire à l'axe ;
   -- la seconde face annulaire est perpendiculaire à l'axe ;
   -- l'anneau est rigide et non élastiquement déformable ;
   -- l'anneau s'étend en continu sur 360° autour du premier axe ;
   -- l'anneau est non fendu ;
   -- le corps de l'embout femelle comprend en outre deux fentes diamétralement opposées aptes à recevoir des jambes latérales d'une épingle métallique ;
   -- l'épingle métallique est apte à retenir axialement l'embout mâle dans l'embout femelle ;
   -- le corps de l'embout femelle est réalisé en matériau plastique ou composite, et/ou l'anneau de l'embout femelle est réalisé en matériau plastique ou composite ;
   -- le joint est élastiquement déformable et est par exemple en élastomère ou équivalent ;
   -- l'anneau est du type indémontable, c'est dire qu'il n'est pas destiné à être démonté et serait détérioré s'il était démonté ;
- l'embout comprend en outre un témoin formé par une pièce portée par l'anneau et mobile entre une position au moins en partie cachée, appelée position cachée, et une position au moins en partie visible, appelée position visible ; dans la présente demande, le témoin est un témoin visuel de bonne connexion c'est-à-dire un témoin qui permet d'identifier visuellement si le raccord fluidique est correctement connecté ou non ; en particulier, lorsque le témoin est dans sa position cachée, le raccord n'est pas connecté ou correctement connecté c'est-à-dire que l'embout mâle n'est pas engagé ou correctement engagé dans l'embout femelle, et lorsque le témoin est dans sa position visible, le raccord est correctement connecté c'est-à-dire que l'embout mâle est correctement engagé dans l'embout femelle ; avantageusement, le déplacement du témoin de sa position cachée à sa position visible a lieu qu'une seule fois lors du premier engagement de l'embout mâle dans l'embout femelle ; le déplacement du témoin est alors du type non réversible ; avantageusement, le déplacement du témoin de sa position cachée à sa position visible a lieu automatiquement par insertion de l'embout mâle dans l'embout femelle ;
- le témoin est mobile entre les positions cachée et visible dans une direction parallèle audit axe ;
- le témoin est monté et est mobile dans une encoche de l'anneau ;
- le témoin comprend au moins un élément élastique apte à coopérer par encliquetage élastique avec l'anneau qui comporte un premier orifice de réception de cet élément élastique lorsque le témoin est dans sa position cachée, et un second orifice de réception de cet élément élastique lorsque le témoin est dans sa position visible ; la coopération de l'élément élastique avec ces orifices permet de définir positivement les deux positions du témoin ; par ailleurs, l'engagement de l'élément élastique dans le second orifice peut permettre d'éviter un retour du témoin dans sa positon cachée ;
- le témoin a une forme générale en L ou en équerre et comprend une première patte orientée parallèlement audit axe et une seconde patte reliée à la première patte et orientée radialement par rapport audit axe ;
- la première patte comprend une surface orientée radialement vers l'extérieur vis-à-vis dudit axe, cette surface étant au moins en partie cachée lorsque le témoin est dans la position cachée, et étant au moins en partie visible lorsque le témoin est en position visible ;
- la surface comprend un repère visuel ou identifiable choisi parmi une couleur, une marque, un QR code, et un DM code ;
- la seconde patte comprend un bord radialement interne apte à coopérer par appui avec ledit embout mâle de façon à déplacer le témoin de sa position cachée à sa position visible ;
- le bord radialement interne est incurvé concave et/ou est chanfreiné ;
- le témoin est monté dans ou au niveau de l'un desdits bossages ;
   -- l'anneau comprend un couloir de guidage du témoin entre ses deux positions.

L'invention concerne également un raccord fluidique comportant un embout femelle tel que décrit ci-dessus, ainsi qu'un embout mâle apte à être engagé dans le passage de l'embout femelle le long dudit premier axe.

Le raccord fluidique selon l'invention peut comprendre une ou plusieurs des caractéristiques suivantes, prises isolément les unes des autres ou en combinaison les unes avec les autres :
-- l'embout mâle comprend une rainure annulaire qui débouche radialement vers l'extérieur ;
-- l'embout mâle est dépourvu de joint ;
-- l'embout mâle comprend deux surfaces cylindriques externes de diamètres différents reliées l'une à l'autre par une surface tronconique ;
-- la rainure est formée sur la surface cylindrique de plus grand diamètre ;
-- l'embout mâle comprend un élément d'indexage apte à coopérer par engagement en direction axiale avec un élément complémentaire du corps de l'embout femelle ;
-- le raccord est du type VDA ou autre système de raccord rapide ;
-- l'embout mâle est réalisé en matériau plastique ou composite ;
   - l'embout mâle comprend une surface tronconique externe apte à venir en appui axial sur le témoin afin de le déplacer de sa position cachée à sa position visible lors de l'engagement de l'embout mâle dans le passage de l'embout femelle.

### Brève description des figures

D'autres caractéristiques et avantages ressortiront de la description qui suit de modes de réalisation non limitatifs de l'invention en référence aux dessins annexés sur lesquels :
la figure 1 est une vue schématique en perspective d'un raccord fluidique selon l'invention,
la figure 2 est une vue schématique en perspective d'un embout mâle du raccord fluidique de la figure 1,
la figure 3 est une vue schématique en perspective d'un embout femelle du raccord fluidique de la figure 1,
la figure 4 est une vue schématique de face de l'embout femelle de la figure 3,
la figure 5 est une vue schématique en perspective d'une épingle du raccord fluidique de la figure 1,
la figure 6 est une vue schématique en perspective de l'embout femelle de la figure 3 sur lequel est monté l'épingle de la figure 5,
la figure 7 est une vue schématique en coupe axiale de l'embout femelle et de l'épingle de la figure 6, selon la ligne VII-VII,
la figure 8 est une autre vue schématique en coupe axiale de l'embout femelle et de l'épingle de la figure 6, selon la ligne VIII-VIII,
la figure 9 est une autre vue schématique en coupe axiale de l'embout femelle et de l'épingle de la figure 6, selon la ligne IX-IX,
la figure 10 est une vue schématique en perspective d'un anneau du raccord fluidique de la figure 1,
la figure 11 est une autre vue schématique en perspective de l'anneau du raccord fluidique de la figure 1,
la figure 12 est une vue schématique en perspective d'un joint du raccord fluidique de la figure 1,
la figure 13 est une vue schématique en coupe axiale du raccord fluidique de la figure 1,
la figure 14 est une vue schématique en perspective de l'anneau de la figure 10 avec le joint de la figure 12,
la figure 15 est une vue schématique en perspective du raccord fluidique de la figure 1 et montre une étape de montage de l'anneau dans l'embout femelle,
la figure 16 est une vue schématique partielle en perspective du raccord fluidique de la figure 1 et montre l'anneau en fin de montage dans l'embout femelle,
la figure 17 est une vue schématique en coupe transversale du raccord fluidique de la figure 1 au niveau de l'anneau,
la figure 18 est une vue schématique en perspective d'une variante de réalisation d'un embout femelle pour un raccord fluidique selon l'invention, et illustre un témoin dans une position cachée,
la figure 19 est une vue schématique de face de l'embout femelle de la figure 18,
la figure 20 est une vue schématique en perspective d'un anneau et d'un témoin de l'embout femelle de la figure 18,
la figure 21 est une autre vue schématique en perspective de l'anneau et du témoin de l'embout femelle de la figure 18,
la figure 22 est une vue schématique en coupe axiale de l'anneau et du témoin de l'embout femelle de la figure 18,
la figure 23 est une autre vue schématique en perspective du témoin de l'embout femelle de la figure 18,
la figure 24 est une autre vue schématique en perspective de l'anneau de l'embout femelle de la figure 18,
la figure 25 est une vue schématique en perspective de l'embout femelle de la figure 18, et illustre le témoin dans une position visible,
la figure 26 est une vue schématique en perspective de l'anneau et du témoin de l'embout femelle de la figure 25, et
la figure 27 est une vue schématique en coupe axiale de l'anneau et du témoin de l'embout femelle de la figure 25.

### Description détaillée de l'invention

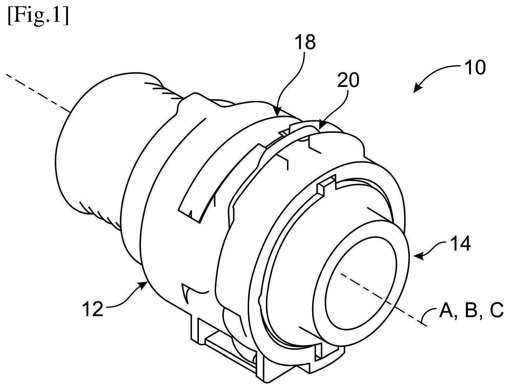

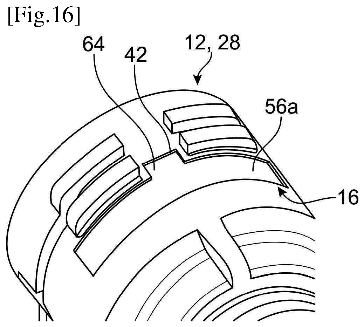

Les figures 1 à 17 illustre un premier mode de réalisation de l'invention.

L'invention concerne à la fois un embout femelle pour un raccord fluidique et un raccord fluidique comportant cet embout femelle.

La figure 1 montre le raccord fluidique 10 dans son ensemble. Pour l'essentiel, ce raccord 10 comprend deux éléments à savoir un embout femelle 12 et un embout mâle 14.

Comme on le verra dans ce qui suit, l'embout femelle 12 comprend un joint d'étanchéité 18 et un anneau 16 de retenue de ce joint.

Par ailleurs, dans l'exemple représenté, l'embout femelle 12 une épingle 20 métallique bien que cet aspect ne soit pas limitatif.

Dans l'exemple représenté, le raccord 10 est du type VDA, l'invention n'étant toutefois pas limitée à cette application et pouvant être du type SAE ou de tout autre type par exemple.

### Embout mâle

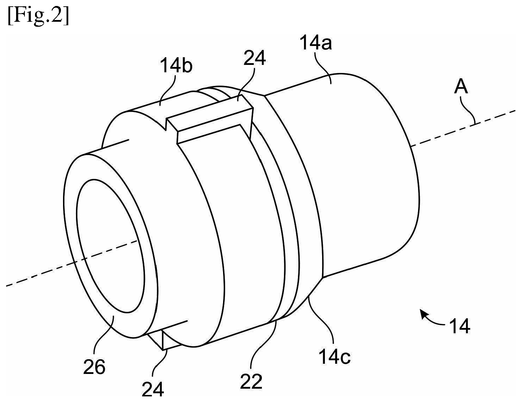

La figure 2 montre l'embout mâle 14 et plus particulièrement un exemple d'embout mâle 14. Cet embout 14 a une forme générale tubulaire le long d'un axe A.

Dans l'exemple représenté, l'embout 14 comprend deux surfaces cylindriques externes 14a, 14b de diamètres différents reliées l'une à l'autre par une surface tronconique 14c.

L'embout 14 comprend une rainure annulaire 22 qui débouche radialement vers l'extérieur et qui est destinée à coopérer par encliquetage élastique avec l'épingle 20 lorsque le raccord 10 est équipé d'une telle épingle 20. La rainure 22 peut être formée sur la surface cylindrique 14b de plus grand diamètre.

L'embout 14 peut comprendre un élément d'indexage apte à coopérer par engagement en direction axiale avec un élément complémentaire de l'embout femelle 12. Dans l'exemple représenté, l'embout comprend deux ailettes 24 en saillie, diamétralement opposées par rapport à l'axe A, et ayant une forme allongée le long de l'axe A. Ces ailettes 24 peuvent être situées sur la surface cylindrique 14b de plus grand diamètre.

Dans cet exemple de réalisation, on constate que l'embout 14 est dépourvu de joint d'étanchéité.

L'embout 14 est de préférence réalisé en matériau plastique ou composite. L'extrémité 26 de l'embout 14 opposée à la surface 14a de plus petit diamètre peut être configurée pour être raccordée et fixée à un tuyau ou un tube, par exemple par soudage, collage, ou fixation mécanique.

### Embout femelle

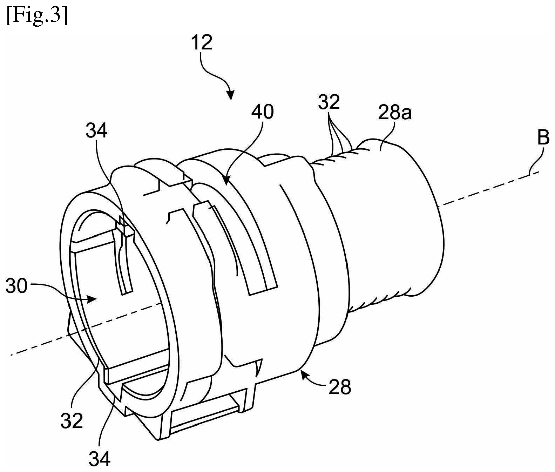

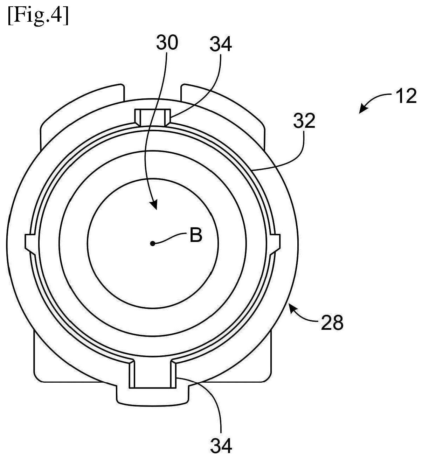

Les figures 3 et 4 montrent l'embout femelle 12 et plus particulièrement un corps 28 de cet embout femelle 12. L'embout 12 et en particulier son corps 28 a une forme générale tubulaire et allongée mais pourrait en variante avoir une forme coudée en L, voire même une forme différente par exemple en T ou en Y.

Le corps 28 comprend un passage interne 30 définissant au moins une entrée de fluide et au moins une sortie de fluide.

Le passage 30 comporte un axe B qui est apte à recevoir l'embout mâle 14 par engagement de l'embout mâle 14 dans l'embout femelle 12 le long de cet axe B. Lorsque les embouts 12, 14 sont montés l'un dans l'autre, leurs axes A, B respectifs sont destinés à être confondus.

Dans l'exemple représenté, le corps 28 comprend un tronçon 28a de raccordement du corps 28 à un tuyau ou à un tube. Ce tronçon 28a peut comprendre des dents annulaires 32 radialement externes pour permettre un ancrage mécanique du tronçon 28a dans un tuyau par exemple.

L'embout mâle 14 est destiné à être engagé dans l'embout femelle 12 du côté opposé à ce tronçon 28a. Le passage 30 débouche ainsi du côté opposé au tronçon 28a, pour former une ouverture 32 d'engagement de l'embout mâle 14.

L'ouverture 32 a une forme complémentaire à celle de l'embout mâle 14 et est visible de face à la figure 4. On constate que l'ouverture 32 comprend l'élément complémentaire d'indexage destiné à coopérer avec l'embout mâle 14. Dans l'exemple représenté, l'embout 12 comprend deux fentes 34, diamétralement opposées par rapport à l'axe B, et ayant une forme allongée le long de l'axe B, pour accueillir les ailettes 24 lors de l'engagement de l'embout mâle 14 dans l'embout femelle 12.

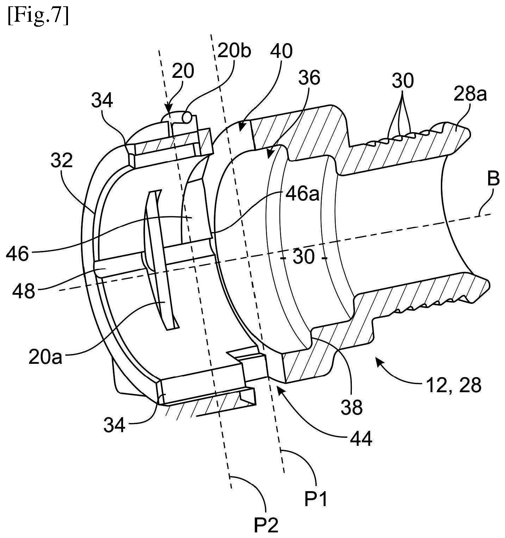

Dans les figures 7 à 9, on constate que le passage 30 comporte d'une part une surface cylindrique interne 36 qui s'étend autour de l'axe B et d'autre part une première face annulaire 38 qui s'étend autour de l'axe B radialement vers l'intérieur depuis une première extrémité axiale de la surface cylindrique 36. La première face 38 est de préférence perpendiculaire à l'axe B.

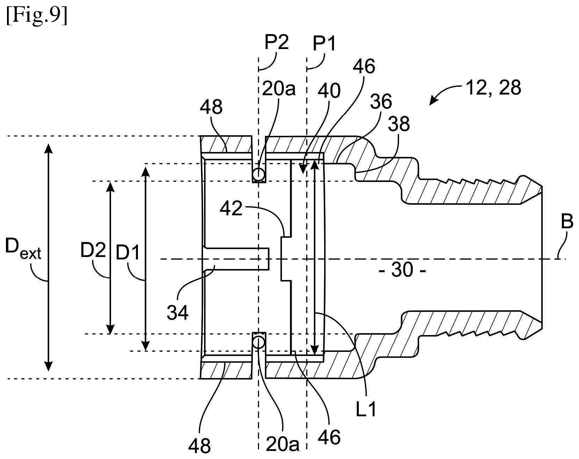

La surface cylindrique 36 a un diamètre D1 (figure 9). La première face 38 a un diamètre interne D2, inférieur à D1.

La particularité du corps 28 est qu'il comprend une première fenêtre 40 de montage de l'anneau 16 dans le passage 30, cette fenêtre 40 étant notamment visible aux figures 3, 7 et 9.

La fenêtre 40 a une forme générale allongée dans un plan P1 perpendiculaire à l'axe B et est apte à permettre le montage de l'anneau 16 dans le passage 30 à travers elle par translation de l'anneau 16 dans le plan P1.

La fenêtre 40 a de préférence une forme générale incurvée ou en arc de cercle autour de l'axe B, comme cela est visible aux figures 3 et 9.

La fenêtre 40 peut avoir une longueur maximale L1 qui représente au moins 70%, et de préférence au moins 80%, d'un diamètre externe Dext du corps au niveau duquel la fenêtre 40 est située (figure 9). La longueur maximale L1 peut représenter au plus 90% du diamètre externe Dext.

La fenêtre 40 débouche de préférence radialement directement du côté de de la seconde extrémité axiale de la surface cylindrique 36, qui est opposée à la première extrémité précitée.

On voit à la figure 9 que la fenêtre 40 peut avoir une forme générale en T et comprendre une fente 42 sensiblement en son milieu. Cette fente 42 s'étend de préférence dans une direction radiale par rapport à l'axe B.

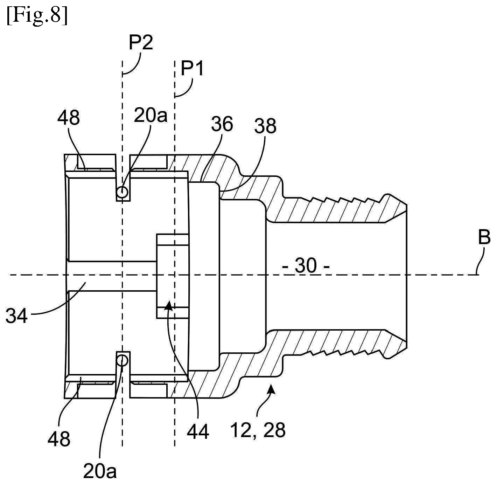

Avantageusement, le corps 28 comprend une seconde fenêtre 44 diamétralement opposée à la première fenêtre 40 et apte à recevoir une partie de l'anneau 16 en fin de montage (figures 7 et 8). Cette fente 44 s'étend de préférence dans une direction radiale par rapport à l'axe B et peut être reliée à l'une des fentes 34 précitées, ou confondues avec l'une de ces fentes 34.

De préférence, les première et seconde fenêtres 40, 44 ont des formes et/ou des dimensions différentes.

Comme on le voit à la figure 7, la fenêtre 40 débouche dans le passage 30 en formant deux rampes 46 qui sont sensiblement parallèles entre elles et à l'axe B. Chacune de ces rampes 46 s'étend depuis la périphérie externe du corps 26 jusqu'à une rainure axiale 48 formée à l'intérieur du corps, dans le passage 30. On comprend donc que le passage 30 comprend deux rainures axiales 48 qui peuvent être diamétralement opposées. On voit dans les figures 4 et 7 à 9 que ces rainures 48 peuvent s'étendre depuis la seconde extrémité précitée de la surface cylindrique 36 jusqu'à l'ouverture 32 du passage 30.

On voit par ailleurs à la figure 9 que la longueur L1 précitée est mesurée entre les rampes 46. Par ailleurs, chacune des rampes 46 peut être reliée à sa rainure 48 par un changement de pente 46a ayant tendance à réduire cette longueur L1 (figure 7).

L'anneau 16 est monté dans le passage 30 à travers la fenêtre 40 de préférence par encliquetage élastique et/ou par engagement en force, comme cela sera décrit plus en détail dans ce qui suit.

Le corps 28 de l'embout 12 est de préférence réalisé en matériau plastique ou composite.

Le corps 28 de l'embout femelle 14 comprend en outre deux fentes 50 diamétralement opposées aptes à recevoir l'épingle 20.

### Epingle

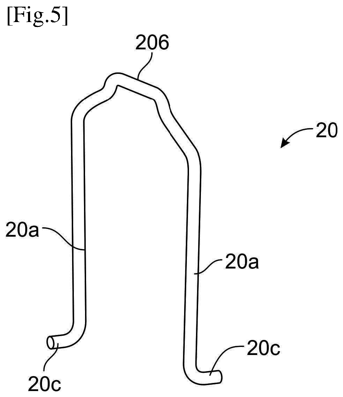

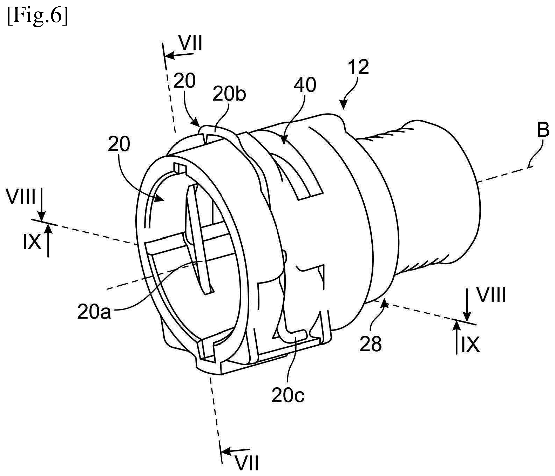

L'épingle 20 est représentée seule à la figure 5 et montée sur le corps 28 de l'embout femelle 12 aux figures 6 à 9 notamment.

Cette épingle 20, connue en soi, est formée par une tige métallique qui est conformée pour avoir une forme en U ou en fer à cheval.

L'épingle 20 comprend deux jambes latérales 20a reliées entre elles par une partie médiane 20b. Chacune des jambes 20a s'étend depuis la partie médiane 20b jusqu'à une extrémité libre 20c qui est repliée ou recourbée. L'épingle 20 est apte à retenir axialement l'embout mâle 14 dans l'embout femelle 12. Pour cela, ses jambes 20a sont montées respectivement dans les fentes 50 du corps 28.

L'épingle 20 est montée à cheval sur le corps 28 de façon à ce que sa partie médiane 20b s'étende autour du corps 28 et que ses jambes 20a soient situées de part et d'autre du corps 28 dans les fentes 50 précitées. Les extrémités libres 20c des jambes 20a sont aptes à coopérer par encliquetage élastique avec des formes complémentaires de la périphérie externe du corps de façon à ce que l'épingle 20 puisse adopter deux positions dans un autre plan P2 perpendiculaire à l'axe B :
- une première position, dite haute, non représentée dans les dessins, dans laquelle l'engagement de l'embout mâle 14 dans l'embout femelle 12 provoque l'écartement des jambes 20a qui prennent appui et glisse sur la surface tronconique 14c de l'embout 14 à mesure que l'embout 14 est engagé dans l'embout 12, la translation de l'embout mâle 14 dans l'embout femelle 12 étant poursuivi jusqu'à ce que les jambes 20a s'engagent par encliquetage élastique dans la rainure 22 de l'embout 14 pour le retenir axialement dans l'embout 12,
- une seconde position, dite basse ou de verrouillage, représentée dans les dessins notamment à la figure 6, dans laquelle les extrémités libres 20c des jambes 20a sont retenues radialement vers l'extérieur par la périphérie externe du corps 28, ce qui empêche les jambes 20a de s'écarter l'un de l'autre et évite un démontage accidentel de l'embout 14 vis-à-vis de l'embout 12.

### Anneau de retenue

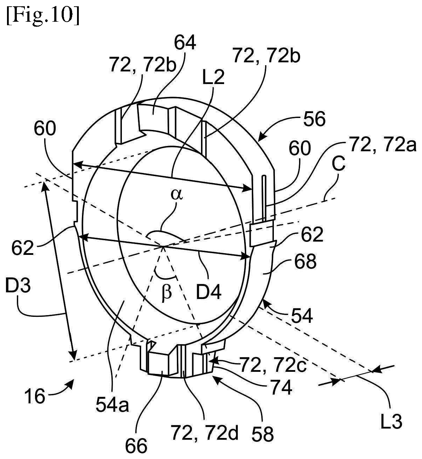

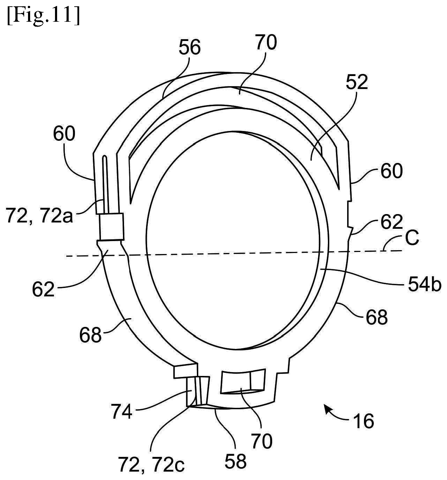

On se réfère désormais aux figures 10 et 11 qui montrent l'anneau de retenue 16 de l'embout femelle 12.

L'anneau 16 a une forme générale annulaire autour d'un axe C qui est destiné à être confondu avec l'axe B lorsque l'anneau 16 est monté dans le passage 30 du corps 28.

L'anneau 16 est de préférence rigide et non élastiquement déformable. Il s'étend en continu sur 360° autour de l'axe C. L'anneau 16 est ainsi non fendu.

L'anneau 16 est destiné à être monté du côté de la seconde extrémité axiale précitée de la surface cylindrique 36.

L'anneau 16 définit une seconde face annulaire 52 qui s'étend autour de l'axe C radialement vers l'intérieur et qui est destinée à être située axialement en regard de la première face 38 précitée du passage 30. La seconde face 52 est de préférence perpendiculaire à l'axe C.

La seconde face 52 a un diamètre interne D3, proche de D2 ou égal à D2. Les faces 38, 52 définissent entre elles et avec la surface cylindrique 36 une gorge annulaire 53 qui débouche radialement vers l'intérieur pour le logement du joint d'étanchéité 18.

Dans la présente demande, on entend par des dimensions « proches » des dimensions qui différent l'une de l'autre de l'ordre de +/-10%. Avantageusement, comme dans l'exemple représenté, l'anneau 16 comprend :
- une base annulaire 54 qui s'étend autour de l'axe C,
- un premier bossage 56 en saillie sur la base 54 et s'étendant radialement vers l'extérieur depuis la base 54,
- et de préférence également un second bossage 58 en saillie sur la base 54, diamétralement opposé au premier bossage 56, et s'étendant radialement vers l'extérieur depuis la base 54.

Le premier bossage 56 est de préférence complémentaire de la première fenêtre 40 et est configuré pour occuper et obturer cette fenêtre 40 lorsque l'anneau 16 est monté dans le corps 28, comme cela est visible à la figure 1 par exemple.

Le second bossage 58 est également de préférence complémentaire de la seconde fenêtre 44 et est configuré pour occuper et obturer cette fenêtre 44 lorsque l'anneau 16 est monté dans le corps 16.

Dans l'exemple représenté, le premier bossage 56 a une forme générale incurvée ou en arc de cercle autour de l'axe C et a une étendue angulaire *α* autour de l'axe C qui est par exemple comprise entre 90 et 180°, et de préférence entre 90 et 130°.

Le second bossage 58 peut avoir une étendue angulaire β autour de l'axe C qui est par exemple comprise entre 10 et 45°, et de préférence entre 30 et 40°.

De préférence, le premier bossage 56 comprend deux extrémités circonférentielles opposées comportant respectivement deux faces latérales 60 parallèles entre elles et à l'axe C et orientées radialement vers l'extérieur dans des directions opposées.

Les faces latérales 60 sont à une distance L2 l'une de l'autre qui est supérieure au diamètre externe D4 maximal de la base 54.

L'anneau 16 comprend de préférence au moins deux dents 62 d'encliquetage élastique qui sont en saillie sur la base 54 et s'étendent radialement vers l'extérieur depuis la base 54.

Les dents 62 sont ici diamétralement opposées et aptes à être engagées respectivement dans les rainures axiales 48 précitées du passage.

L'anneau 16 peut en outre comprendre au moins un élément d'indexage apte à coopérer avec au moins un élément complémentaire du corps 28.

Dans l'exemple représenté, l'anneau 16 comprend au moins un premier doigt d'indexage 64 en saillie axiale sur le premier bossage 56, voire également un second doigt d'indexage 66 en saillie axiale sur le second bossage 58. Les doigts 64, 66 sont ici en saillie sur un même côté de l'anneau 16.

Les doigt 64, 66 sont aptes à être engagés dans les fentes 42, 44 précitées du corps 28. On comprend donc que le doigt 64 a une forme complémentaire de la fente 42 dans laquelle il est destiné à être engagé, et que le doigt 66 a une forme complémentaire de la fente 44 dans laquelle il est destiné à être engagé.

De préférence, les doigts 64, 66 ont des formes et/ou des dimensions différentes.

Dans l'exemple représenté, la base 54 comprend une surface tronconique interne 54a qui s'étend sur au moins 80%, voire 90%, de la longueur L3 ou dimension axiale de la base mesurée le long de l'axe C. Sur le reste de sa longueur, la base 54 peut comprendre une surface cylindrique 54b visible à la figure 11. Cette surface 54a peut permettre de faciliter le guidage de l'embout mâle 14 dans l'embout femelle 12, en coopérant avec la surface cylindrique 14s de l'embout mâle 14 par exemple.

Le ou chaque bossage 56, 58 peut être formé sur une surface cylindrique externe 68 de la base 54 qui s'étend sur au moins 80%, voire 90%, de sa longueur L3 ou dimension axiale mesurée le long de l'axe C. La surface cylindrique externe 68 de la base 54 peut s'étendre sur 100% de la longueur L3.

Par ailleurs, l'anneau 16 peut comprendre au moins un évidement 70 d'allégement, qui débouche par exemple du côté de la seconde face annulaire 52. Le ou chaque évidement 70 est de préférence du type borgne. Deux évidements 70 peuvent être formés respectivement dans les deux bossages 56, 58 par exemple.

De manière avantageuse, l'anneau 16 comprend des nervures 72 en saillie sur au moins une face de l'anneau perpendiculaire à l'axe C et/ou sur au moins une face de l'anneau parallèle à l'axe C.

Ces nervures 72 ont de préférence une forme allongée et s'étendent parallèlement au plan P1.

Les nervures 72 sont aptes à coopérer par appui et glissement avec le corps 28 lors du montage de l'anneau 16 de façon à créer des points durs lors de ce montage.

Les nervures 72 peuvent être formées sur les bossages 56, 58 comme dans l'exemple représenté.

Le bossage 56 peut par exemple comprendre des nervures 72a sur ces faces 60, et des nervures 72b sur la face du bossage 56 opposée à la face 52. Les nervures 72a sont par exemple au nombre de deux et centrées sur les faces 60. Les nervures 72b sont par exemple situées de part et d'autre du doigt 64.

Le bossage 58 peut par exemple comprendre des nervures 72c sur des faces 74 latérales parallèles aux faces 60, et des nervures 72d sur la face du bossage 58 opposée à la face 52. Les nervures 72c sont par exemple au nombre de deux et centrées sur les faces 74. Les nervures 72d sont par exemple situées de part et d'autre du doigt 66.

L'anneau 16 est de préférence formé d'une seule pièce en matériau plastique ou composite.

### Joint

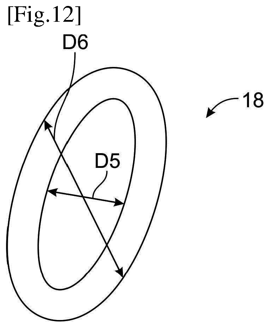

Le joint 18 est représenté seul à la figure 12. Dans l'exemple représenté, il s'agit d'un joint annulaire du type torique.

Le joint 18 est élastiquement déformable et est par exemple en élastomère ou équivalent.

En variante, le joint 18 pourrait être différent et pourrait par exemple être un joint à lèvre, ayant par exemple une forme générale en V en section transversale.

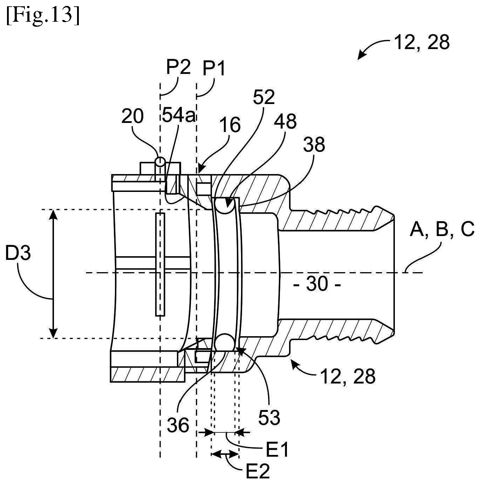

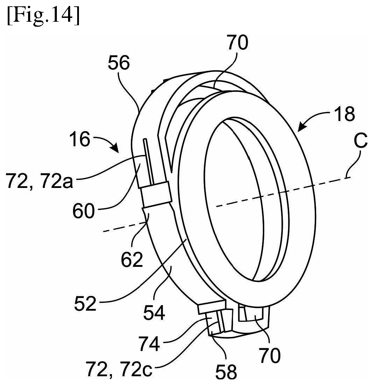

On voit aux figures 13 et 14 quel le joint 18, à l'état sans contrainte, a un diamètre interne D5 qui est proche des diamètres D2 et D3 ou inférieur à ces diamètres D2 et D3, et un diamètre externe D6 qui est proche du diamètre D1 ou supérieur à ce diamètre D1.

Dans la figure 13 qui montre le joint 18 monté dans la gorge 53 de l'embout femelle 12, on constate par ailleurs que le joint 18 est apte à coopérer par appui axial, respectivement avec les faces 38, 52, et par appui radial respectivement avec la surface 36 et avec l'embout mâle 14 (en particulier sa surface 14a). On constate en outre quel l'épaisseur E1 ou dimension axiale de la gorge 53 peut être supérieure à l'épaisseur E2 ou dimension axiale du joint 18.

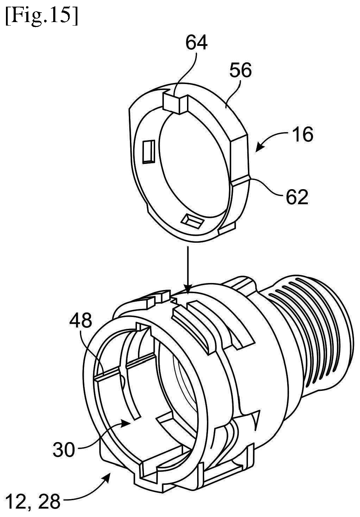

On se réfère désormais aux figures 15 à 17 qui illustrent au moins une étape de montage d'assemblage de l'embout femelle 12 et en particulier de montage de l'anneau 16 sur le corps 28 de l'embout 12.

L'anneau 16 est monté sur le corps 28 avant ou après le montage de l'épingle 20 sur le corps 28.

Le joint 18 est monté dans le passage 30 du corps 28 en alignant l'axe du joint 18 sur l'axe B du corps 28 puis en déplaçant le joint 18 vers le corps 28, jusqu'à ce que le joint soit entourée par la surface 36 du passage. Le joint 18 peut alors se retrouver en appui axial sur la face 38.

L'anneau 16 est ensuite monté dans le passage 30 à travers la fente 40, comme illustré à la figure 15. L'anneau 16 est déplacé dans le plan P1 en engageant d'abord le côté de l'anneau 16 opposé à son premier bossage 56, ce côté pouvant comprendre le second bossage 58 précité.

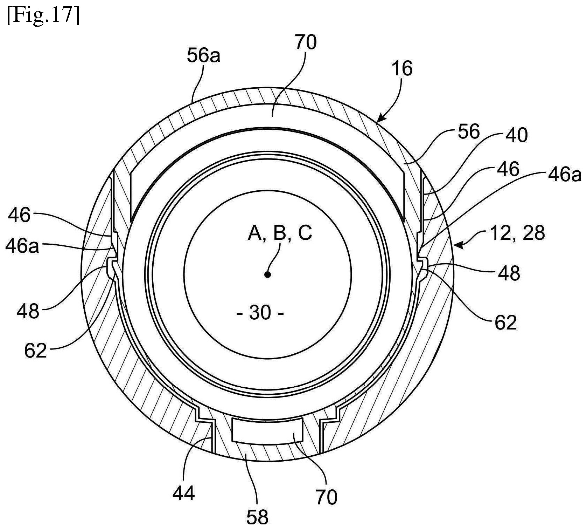

Une force, de préférence manuelle, est exercée sur l'anneau 16 dans le plan P1 en direction de l'axe C pour forcer les nervures à glisser sur les surfaces en regard du corps 28 de l'embout 12. Les faces 60 de l'anneau 16 coopèrent par glissement avec les rampes 46 du corps 28 pour faciliter le guidage lors du montage. Le montage est terminé lorsque les dents 62 de l'anneau sont logés par encliquetage élastique dans les rainures 48 du corps 28, comme cela est visible à la figure 17. Dans cette position, le premier bossage 56 est logé dans la fenêtre 40 et le seconde bossage 58 est logé dans la fenêtre 44. La périphérie externe du premier bossage 56 peut comprendre une surface externe 56a en portion de cylindre qui est alignée avec une surface cylindrique externe du corps 28 de façon à rendre l'anneau quasi invisible et avantageusement quasi insaisissable à la main ou par un outil dans la mesure où l'anneau 16 n'est pas destiné à être démonté.

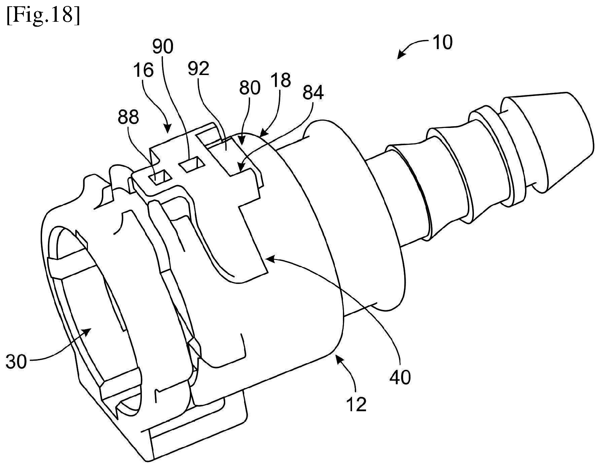

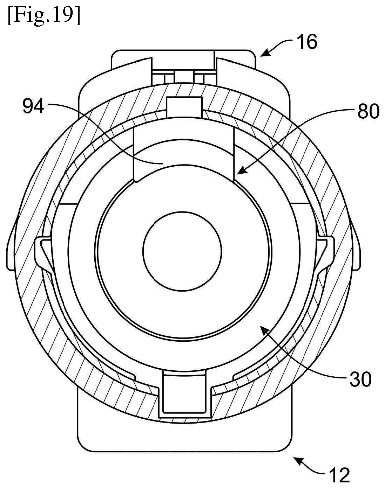

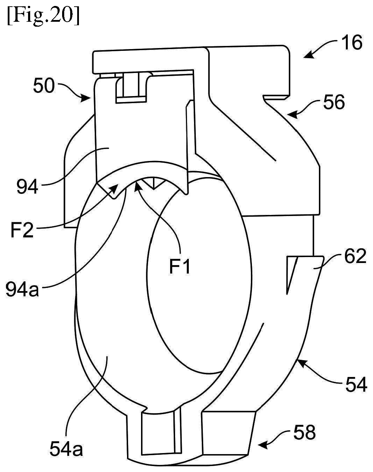

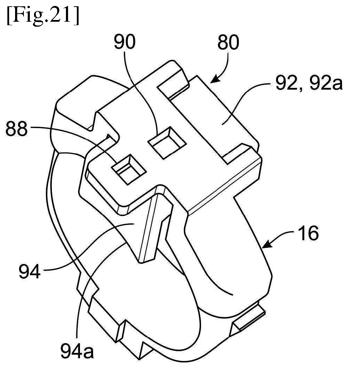

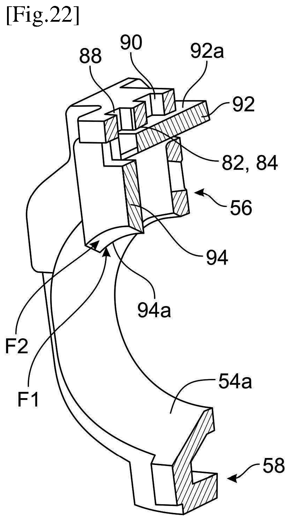

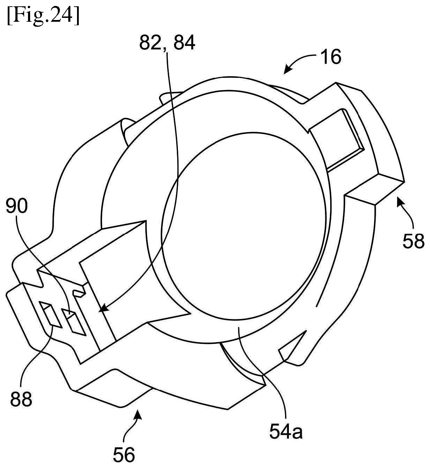

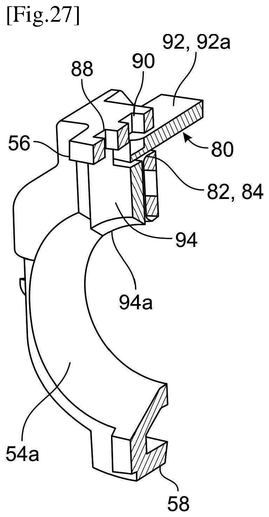

Les figures 18 à 27 illustrent une variante de réalisation de l'invention. Dans ces figures, les éléments déjà décrits dans ce qui précède sont désignés par les mêmes références. La description qui précède faite en référence aux figures 1 à 17 s'applique donc à cette variante dans la mesure où elle ne contredit pas ce qui suit ou n'est pas contraire à ce qui suit.

Dans cette variante, l'embout femelle 12 comprend en outre un témoin 80 formé par une pièce portée par l'anneau 16 et mobile entre une position au moins en partie cachée, appelée position cachée, et une position au moins en partie visible, appelée position visible.

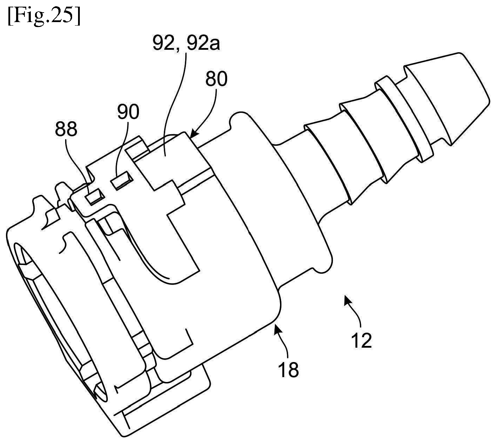

Les figures 18 à 22 illustrent le témoin 80 dans sa position cachée et les figures 25 à 27 illustrent le témoin 80 dans sa position visible.

Le témoin 80 est un témoin visuel de bonne connexion c'est-à-dire un témoin qui permet d'identifier visuellement si le raccord fluidique est correctement connecté ou non.

Lorsque le témoin 80 est dans sa position cachée, le raccord 10 n'est pas connecté ou correctement connecté c'est-à-dire que l'embout mâle 14 n'est pas engagé ou correctement engagé dans l'embout femelle 12. Lorsque le témoin 80 est dans sa position visible, le raccord 10 est correctement connecté c'est-à-dire que l'embout mâle 14 est correctement engagé dans l'embout femelle 12.

Dans l'exemple représenté, le déplacement du témoin 80 de sa position cachée à sa position visible a lieu qu'une seule fois lors du premier engagement de l'embout mâle 14 dans l'embout femelle 12. Le déplacement du témoin est alors du type non réversible. Ce déplacement est provoqué par l'embout mâle 14 lui-même et en particulier pas sa surface tronconique 14c (figure 2) qui est destinée à prendre appui axialement sur le témoin 80 afin de le déplacer de sa position cachée à sa position visible.

Le témoin 80 est avantageusement mobile entre les positions cachée et visible dans une direction parallèle à l'axe C.

Dans l'exemple représenté, le témoin 80 est monté et est mobile dans une encoche 82 de l'anneau 16 qui comprend de préférence un couloir 84 de guidage de l'anneau le long de l'axe C. La coopération du témoin 80 avec le couloir 84 peut être du type rail-glissière.

Le témoin 80 comprend de préférence au moins un élément élastique 86 apte à coopérer par encliquetage élastique avec l'anneau 16. L'anneau 16 peut comporter un premier orifice 88 de réception de cet élément élastique 86 lorsque le témoin 80 est dans sa position cachée, et un second orifice 90 de réception de cet élément élastique 86 lorsque le témoin 80 est dans sa position visible. Les orifices 88, 90 peuvent être situés l'un derrière l'autre le long de l'axe C, comme dans l'exemple représenté.

La coopération de l'élément élastique 86 avec ces orifices 88, 90 permet de définir positivement les deux positions du témoin 80 et de les maintenir dans ces positions. L'engagement de l'élément élastique 86 dans le second orifice 90 peut par exemple permettre d'éviter un retour du témoin 80 dans sa positon cachée.

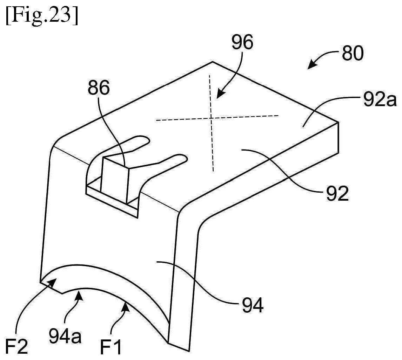

Comme dans l'exemple représenté, le témoin 80 peut avoir une forme générale en L ou en équerre (figure 23) et comprendre une première patte 92 orientée parallèlement à l'axe C et une seconde patte 94 reliée à la première patte 92 et orientée radialement par rapport à l'axe C.

La première patte 92 peut comprendre une surface 92a orientée radialement vers l'extérieur vis-à-vis de l'axe C. Cette surface 92a est au moins en partie cachée lorsque le témoin 80 est dans la position cachée (figure 18), et au moins en partie visible lorsque le témoin 80 est en position visible (figure 25). La surface 92a peut comprendre un repère 96 visuel ou identifiable choisi parmi une couleur, une marque, un QR code, et un DM code (figure 23).

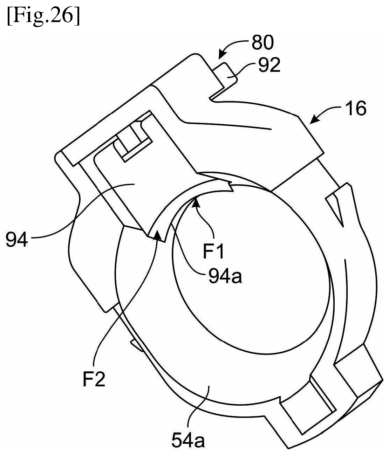

La seconde patte 94 peut comprendre un bord radialement interne 94a apte à coopérer par appui avec l'embout mâle 14 comme évoqué dans ce qui précède. Ce bord 94a peut être incurvé concave comme indiqué par la flèche F1 et/ou est chanfreiné comme indiqué par la flèche F2. Le chanfrein est avantageusement conçu pour être sensiblement aligné avec la surface tronconique interne 54a de l'anneau 16 lorsque le témoin 80 est dans sa position visible (figure 26).

Dans l'exemple représenté, le témoin 80 est monté dans ou au niveau de l'un des bossages 56, 58, et en particulier du bossage 56.

On comprend que dans l'exemple représenté, le témoin 80 est monté dans l'encoche 82 de l'anneau 16 avant le montage de l'anneau 16 dans la fenêtre 40 du corps 28 de l'embout femelle 12. Ceci permet de rendre imperdable le témoin 80.

## Revendications

1. Embout femelle (12) pour un raccord fluidique (10), cet embout (12) comportant :
- un corps (28) tubulaire comprenant un passage interne (30) définissant au moins une entrée de fluide et au moins une sortie de fluide, le passage interne (30) comportant un premier axe (B) et étant apte à recevoir un embout mâle (14) par engagement de l'embout mâle (14) dans l'embout femelle (12) le long dudit axe (B), le passage (30) comportant une surface cylindrique interne (36) s'étendant autour dudit axe (B) et une première face annulaire (38) qui s'étend autour dudit axe (B) radialement vers l'intérieur depuis une première extrémité axiale de la surface cylindrique (36),
- un anneau de retenue (16) monté dans le passage (30), du côté d'une seconde extrémité axiale de la surface cylindrique (36), opposée à ladite première extrémité, cet anneau (16) définissant une seconde face annulaire (52) qui s'étend autour dudit axe (B) radialement vers l'intérieur, les première et seconde faces annulaires (38, 52) étant axialement en regard l'une de l'autre et définissant entre elles et avec ladite surface cylindrique (36) une gorge annulaire (54) débouchant radialement vers l'intérieur, et
- un joint annulaire (18) d'étanchéité logé dans ladite gorge (54), le joint (18) étant apte à coopérer par appui axial, respectivement avec lesdites première et seconde faces annulaires (38, 52), et par appui radial respectivement avec ladite surface cylindrique (36) et ledit embout mâle (14),
le corps (28) comprenant une première fenêtre (40) de montage de l'anneau (16) dans le passage (30), cette première fenêtre (40) ayant une forme générale allongée dans un plan (P1) perpendiculaire audit axe (B) et étant apte à permettre le montage de l'anneau (16) dans le passage (30) à travers elle par translation de l'anneau (16) dans ledit plan (P1),
l'embout comprenant en outre un témoin (80) formé par une pièce portée par l'anneau (16) et mobile entre une position au moins en partie cachée, appelée position cachée, et une position au moins en partie visible, appelée position visible, ledit témoin (80) étant de préférence configuré pour se déplacer de sa position cachée à sa position visible lors de l'engagement de l'embout mâle (14) dans le passage (30) de l'embout femelle (12).

2. Embout (12) selon la revendication 1, dans lequel le témoin (80) est mobile entre les positions cachée et visible dans une direction parallèle audit axe (B).

3. Embout (12) selon la revendication 1 ou 2, dans lequel le témoin (80) est monté et est mobile dans une encoche (82) de l'anneau (16).

4. Embout (12) selon l'une des revendications 1 à 3, dans lequel le témoin (80) comprend au moins un élément élastique (86) apte à coopérer par encliquetage élastique avec l'anneau (16) qui comporte un premier orifice (88) de réception de cet élément élastique (86) lorsque le témoin (80) est dans sa position cachée, et un second orifice (90) de réception de cet élément élastique (86) lorsque le témoin (80) est dans sa position visible.

5. Embout (12) selon l'une des revendications 1 à 4, dans lequel le témoin (80) a une forme générale en L ou en équerre et comprend une première patte (92) orientée parallèlement audit axe (B) et une seconde patte (94) reliée à la première patte (92) et orientée radialement par rapport audit axe (B).

6. Embout (12) selon la revendication 5, dans lequel la première patte (92) comprend une surface (92a) orientée radialement vers l'extérieur vis-à-vis dudit axe (B), cette surface (92a) étant au moins en partie cachée lorsque le témoin (80) est dans la position cachée, et étant au moins en partie visible lorsque le témoin (80) est en position visible.

7. Embout (12) selon la revendication 6, dans lequel la surface (92a) comprend un repère (96) visuel ou identifiable choisi parmi une couleur, une marque, un OR code, et un DM code.

8. Embout (12) selon l'une des revendication 5 à 7, dans lequel la seconde patte (94) comprend un bord radialement interne (94a) apte à coopérer par appui avec ledit embout mâle (14) de façon à déplacer le témoin (80) de sa position cachée à sa position visible.

9. Embout (12) selon la revendication 8, dans lequel le bord radialement interne (94a) est incurvé concave et/ou est chanfreiné.

10. Embout (12) selon l'une des revendication 1 à 9, en dépendance de l'une des revendications 9 à 15, dans lequel le témoin (80) est monté dans ou au niveau d'un bossage (56, 58) de l'anneau (16).

11. Raccord fluidique (10) comportant un embout femelle (12) selon l'une des revendications précédentes, ainsi qu'un embout mâle (14) apte à être engagé dans le passage (30) de l'embout femelle (12) le long dudit premier axe (B).

12. Raccord fluidique selon la revendication précédente, dans lequel l'embout mâle (14) comprend une surface tronconique externe (14c) apte à venir en appui axial sur le témoin (80) afin de le déplacer de sa position cachée à sa position visible lors de l'engagement de l'embout mâle (14) dans le passage (30) de l'embout femelle (12).
